## Europäisches Patentamt

## European Patent Office

## Office européen des brevets

(11) Veröffentlichungsnummer: **0 305 907 B1**

# EUROPÄISCHE PATENTSCHRIFT

(45) Veröffentlichungstag der Patentschrift: **04.03.92**

(51) Int. Cl.⁵: **B60Q 1/52**

(21) Anmeldenummer: **88113905.9**

(22) Anmeldetag: **26.08.88**

(54) Einparkhilfsvorrichtung.

(30) Priorität: **29.08.87 DE 3728948**

(43) Veröffentlichungstag der Anmeldung:
**08.03.89 Patentblatt 89/10**

(45) Bekanntmachung des Hinweises auf die
Patenterteilung:
**04.03.92 Patentblatt 92/10**

(84) Benannte Vertragsstaaten:
**DE ES FR GB IT SE**

(56) Entgegenhaltungen:
**BE-A- 896 384**
**US-A- 4 626 849**

**PATENT ABSTRACTS OF JAPAN, Band 7, Nr.
116 (M-216)[1261], 20. Mai 1983; & JP-A-58 36
741 (ICHIKO KOGYO K.K.) 03-03-1983**

**PATENT ABSTRACTS OF JAPAN, Band 7, Nr.
261 (M-257)[1406], 19. November 1983; & JP-
A-58 141 949 (HITACHI SEISAKUSHO K.K.)
23-08-1983**

**PATENT ABSTRACTS OF JAPAN, Band 8, Nr.
128 (M-302)[1565], 14. Juni 1984; & JP-A-59 32
539 (HITACHI SEISAKUSHO K.K.) 22-02-1984**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Weishaupt, Walter**
**Am Wismat 28b**
**W-8000 München 60(DE)**
Erfinder: **Ramböck, Josef**
**Linnenbrüggerstrasse 31**
**W-8000 München 82(DE)**

Rank Xerox (UK) Business Services

**Beschreibung**

Die Erfindung bezieht sich auf eine Einparkhilfsvorrichtung nach dem Oberbegriff des Patentanspruchs 1.

Bei einer derartigen, aus der BE-A-896384 bekannten Vorrichtung strahlen der oder die Sender ein Sendesignal in Längsrichtung des Kraftfahrzeugs ab. Damit soll es möglich sein, den Abstand des Kraftfahrzeugs von den die Parklücke begrenzenden Gegenständen während des Ein- bzw. Ausparkens abzuschätzen. Bedingt durch den relativ großen Öffnungswinkel des (der) Sender von etwa 90 Grad hält der Fahrzeugbenutzer aber auch dann, wenn sich das Kraftfahrzeug in einem ausreichenden Abstand von diesen Gegenständen befindet, den Hinweis auf eine drohende Kollision. Zudem erhält er diese Information nur während des Ein- bzw. Ausparkens. Der Erfindung liegt die Aufgabe zugrunde, eine Vorrichtung der eingangs genannten Art zu schaffen, die auf einfache Weise eine Bestimmung der Größe einer Parklücke insbesondere vor dem eigentlichen Einparkvorgang ermöglicht.

Die Erfindung löst diese Aufgabe mit den kennzeichnenden Mitteln des Patentanspruchs 1.

Der Grundgedanke der Erfindung besteht darin, mit Hilfe des Sende- und Reflexsignals die Größe der Parklücke zu vermessen. Das Reflexsignal zeigt bei der Bewegung des Kraftfahrzeugs relativ zur Parklücke einen charakteristischen Verlauf. Wird nur mit einem Sende-/Empfängerpaar gearbeitet, so nimmt die Intensität des Reflexsignals bei Erreichen der Parklücke relativ stark ab. Bei Verlassen des Bereichs der Parklücke steigt es dann wieder auf einen mit dem ursprünglichen vergleichbaren Wert an. Sind zwei Sender-/Empfängerpaare vorgesehen, so können mit diesen zweckmäßigerweise jeweils ein Endpunkt der Parklücke bestimmt werden. Auch hier tritt bei einem derartigen Punkt eine abrupte Änderung des Reflexsignals auf.

Die Berücksichtigung des zurückgelegten Wegs kann ferner zusammen mit weiteren Kraftfahrzeuggrößen dazu dienen, eine Anzeige als Einparkhilfe zu steuern. Es wird damit die weitere Aufgabe gelöst, ein Einparkhilfsverfahren zu schaffen, das den Fahrer während des eigentlichen Einparkvorgangs unterstützt. Bei den Kraftfahrzeuggrößen kann es sich um den Lenkwinkel und den Seitenabstand handeln. Letzterer zeigt sich durch ein charakteristisches Verhalten des bzw. der von dem (den) Sender(n) ausgestrahlten und empfangsseitig aufgenommenen Reflexsignal(e). Die Anzeige kann optisch, akustisch oder auch taktil erfolgen. Hierzu kann eine Lenkunterstützung (Servolenkung) nur für die jeweils "richtige" Lenkbewegungsrichtung vorgesehen sein. Die Vergleichseinrichtung kann dabei den Bewegungsverlauf des Kraftfahrzeugs während des Einparkvorgangs mit vorgegebenen Verläufen für die aktuellen Parameter Parklücken-Länge, Lenkwinkel, Seitenabstand usw. in Beziehung setzen.

Eine besonders wirksame Einparkhilfsvorrichtung ergibt sich dann, wenn in der Vergleichseinrichtung auch mindestens ein Abmessungswert des Kraftfahrzeugs als Referenzwert vorliegt. Dabei kann es sich um die Eigenlänge und/oder die Diagonale des Kraftfahrzeugs handeln. Aus dem gemessenen Wert der Parklücken-Länge und der Abmessungen des Kraftfahrzeugs läßt sich genau abschätzen, ob die Parklücke für das Kraftfahrzeug ausreicht.

Ist nur ein Sender-/Empfängerpaar vorhanden, so kann dieses mit Vorteil am vorderen Eckpunkt der Kraftfahrzeug-Karosserie sitzen. Dadurch wird bei der Vorbeifahrt an der Parklücke deren Länge zu einem besonders frühen Zeitpunkt bestimmt.

Schließlich besteht die Möglichkeit, den Sender und den Empfänger in Abhängigkeit von Parametern selbsttätig zu aktivieren, die für einen Parkvorgang charakteristisch sind. Hierzu gehören das Betätigen des Richtungsblinkers, die Verringerung der Fahrzeuggeschwindigkeit und der charakteristische Verlauf des Reflexsignals, der bei Erreichen der Parklücke in der geschilderten Weise abrupt abnimmt. Neben der Verringerung der Fahrzeuggeschwindigkeit ist auch ein kleiner, unveränderlicher Wert dieser Geschwindigkeit typisch für den Einparkvorgang. Eine Vergrößerung der Fahrzeuggeschwindigkeit jedoch ist atypisch für einen Einparkvorgang und führt sinnvoller Weise dazu, einen ggf. aktivierten Sender bzw. Empfänger wieder auszuschalten.

Die Erfindung ist anhand eines in der Zeichnung dargestellten Ausführungsbeispiels weiter erläutert.

Es zeigt

Fig.1    den konstruktiven Aufbau einer Einparkhilfsvorrichtung gem. der Erfindung und

Fig. 2    den Verlauf des Reflexsignals bei einer Parklücke.

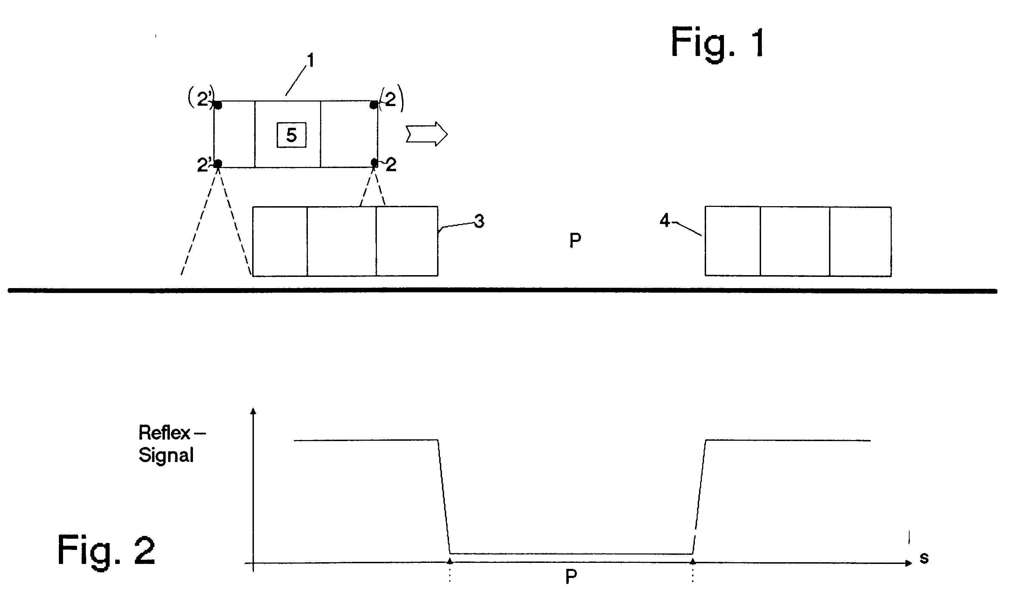

Eine Einparkhilfsvorrichtung für ein in Fig. 1 schematisch dargestelltes Kraftfahrzeug 1 besteht im wesentlichen aus einem Sender-/Empfängerpaar 2, das an einem Eckpunkt des Kraftfahrzeugs 1 angeordnet ist. Das Kraftfahrzeug 1 ist schematisch von oben gezeigt. Bei Erreichen einer Parklücke, die durch zwei weitere Kraftfahrzeuge 3 und 4 gebildet ist, wird das Sender-/Empfängerpaar 2 aktiviert. Der Sender sendet ein Sendesignal aus, das zu einem Reflexsignal umgewandelt und mit dem Empfänger des Paares 2 aufgenommen wird. Das Reflexsignal ist einer Vergleichseinrichtung 5 des Kraftfahrzeugs 1 zugeführt, die als weitere Eingangsinformation den zurückgelegten Weg s enthält. Anhand des Reflexsignals läßt sich damit die Größe der Parklücke P bestimmen. Ein Vergleich mit der zweckmäßigerweise vorgegebenen Fahrzeuglänge bzw. -diagonalen zeigt unmittelbar, ob die Parklücke voraussichtlich für das Kraftfahrzeug 1 ausreichend ist.

Wesentlich ist, daß das Sendesignal in einem relativ kleinen Winkelbereich ausgesandt wird. Nur dadurch wird die Kontur der Kraftfahrzeuge 3 und 4 mit guter Näherung bestimmbar. Dies ist schematisch anhand von Fig. 2 gezeigt. Darin ist die Intensität des Reflexsignals in Abhängigkeit vom zurückgelegten Weg s des Kraftfahrzeugs 1 dargestellt. Diese Intensität nimmt im Bereich der Parklücke gegenüber dem Bereich außerhalb der Parklücke, d.h. seitlich von den Kraftfahrzeugen 3 bzw. 4, deutlich ab. Damit ist es möglich, ggf. unter Berücksichtigung des im wesentlichen durch den Winkel des Sendesignals verursachten Meßfehler, die Größe der Parklücke zu bestimmen und mit der Eigenlänge des Kraftfahrzeugs in Beziehung zu setzen. Durch eine geeignete Anzeigevorrichtung erhält der Fahrer unmittelbar die Information, ob die Parklücke P voraussichtlich ausreicht.

Das Aktivieren des Sender-/Empfängerpaars kann manuell mit Hilfe eines geeigneten Schalters oder auch selbsttätig vorgenommen werden. Hierzu sind bestimmte Parameter zu beachten, die erfüllt sein müssen und anhand derer ein bevorstehender Einparkvorgang erkannt wird. Hierzu gehört eine sich nicht vergrößernde Geschwindigkeit des Kraftfahrzeugs bei der Vorbeifahrt an der Parklücke P, das Setzen des Fahrtrichtungsanzeigers, der charakteristische Verlauf des Reflexsignals und ggf. auch ein nach der Vorbeifahrt an der Parklücke P erfolgender Stop des Kraftfahrzeugs sowie ferner das Einlegen der Fahrstufe für Rückwärts.

Anstelle nur eines Sender-/Empfängerpaars können auch zwei derartige Paare 2 und 2′, beispielsweise an dem vorderen und hinteren seitlichen Eckpunkt des Kraftfahrzeugs 1 vorgesehen sein. Damit ist es möglich, eine eindeutige Aussage über die Größe der Parklücke ohne Bezug zur Eigenlänge des Kraftfahrzeugs 1 zu gewinnen. Eine ausreichende Größe der Parklücke liegt dann vor, wenn das Reflexsignal die für das Ende der Parklücke (Eckpunkt des Kraftfahrzeugs 4) wegmäßig nach dem für den Beginn der Parklücke charakteristischen Abfall des mit dem Empfänger Paares 2′ aufgenommenen Reflexsignals aufweist. Das Sende-Empfängerpaar 2′ kann bei einem Parkvorgang in Rückwärtsrichtung den Zeitpunkt anzeigen, wann die Lenkung für das Einfahren in die Parklücke betätigt werden muß. In der Regel ist dies der Zeitpunkt, bei dem die Fahrzeuge 1 und 4 unmittelbar nebeneinander stehen. Sie kann ferner auch in Verbindung mit entsprechenden Steuereinrichtungen für das Kraftfahrzeug die für den Parkvorgang notwendigen Lenkbewegungen selbsttätig vornehmen.

## Patentansprüche

1. Einparkhilfsvorrichtung für Kraftfahrzeuge mit mindestens einem an der Fahrzeugaußenseite angeordneten Sender (2) für ein in Richtung auf einen eine Parklücke begrenzenden Körper (3,4) abgestrahltes Sendesignal und einem zugeordneten Empfänger für das Reflexsignal, dadurch gekennzeichnet, daß das Sendesignal auf einen kleinen Ausstrahlwinkel begrenzt und quer zur Längsachse des Kraftfahrzeugs (5) abgestrahlt ist, daß das während der Vorbeifahrt an der Parklücke (P) gewonnene Reflexsignal im Bereich der Parklücke sich deutlich von dem Reflexsignal außerhalb der Parklücke unterscheidet und daß das Reflexsignal einer Vergleichseinrichtung zugeführt ist, die als weitere Eingangsgröße einen für den zurückgelegten Weg charakteristischen Wert erhält.

2. Vorrichtung nach Anspruch 1, dadurch gekennzeichnet, daß in der Vergleichseinrichtung mindestens ein Abmessungswert des Kraftfahrzeugs als Referenzwert vorliegt.

3. Vorrichtung nach Anspruch 1 oder 2, dadurch gekennzeichnet, daß der Sender an einem vorderen Eckpunkt des Kraftfahrzeugs sitzt.

4. Vorrichtung nach einem der Ansprüche 1 bis 3, dadurch gekennzeichnet, daß der Sender selbsttätig in Abhängigkeit von für einen Einparkvorgang charakteristischen Parametern aktivierbar ist.

5. Einparkhilfsverfahren für Kraftfahrzeuge unter Verwendung einer Vorrichtung nach einem der Ansprüche 1 bis 4, dadurch gekennzeichnet, daß der zurückgelegte Weg während des Einfahrens in die Parklücke zusammen mit weiteren Kraftfahrzeuggrößen zur Steuerung einer Anzeige dient.

## Claims

1. A parking aid device for motor vehicles with at least one transmitter (2), arranged on the exterior of the vehicle, for a transmission signal emitted in the direction of a body (3,4) delimiting a parking space, and with an associated receiver for the reflex signal, characterised in that the transmission signal is restricted to a small emission angle and is radiated transversely to the longitudinal axis of the motor vehicle (5), that the reflex signal obtained whilst driving past the parking space (P) in the region of the parking space clearly differs from the reflex signal outside the parking space, and that the reflex signal is passed to a comparator device which, as a further input value, receives a characteristic value for the distance covered.

2. A device according to Claim 1, characterised in that, in the comparator device, at least one dimensional value of the motor vehicle is present as a reference value.

3. A device according to Claim 1 or 2, characterised in that the transmitter sits on a front corner point of the motor vehicle.

4. A device according to one of Claims 1 to 3, characterised in that the transmitter is able to be activated automatically as a function of parameters which are characteristic of a parking procedure.

5. A parking aid procedure for motor vehicles, using a device according to one of Claims 1 to 4, characterised in that the distance covered whilst driving into the parking space together with further motor vehicle dimensions serves to control a display.

**Revendications**

1. Dispositif d'assistance aux manoeuvres de garage d'un véhicule automobile comportant au moins un émetteur (2) prévu sur le côté extérieur du véhicule pour émettre un signal d'émission en direction d'un obstacle (3, 4) délimitant un créneau de garage et un récepteur recevant le signal réfléchi, dispositif caractérisé en ce que le signal émis est limité à un petit angle d'émission et l'émission se fait transversalement à l'axe longitudinal du véhicule (5) et le signal réfléchi, recueilli pendant le passage devant le créneau de garage (P) dans la zone du créneau se distingue nettement du signal réfléchi en dehors du créneau de garage et le signal réfléchi est fourni à un dispositif de comparaison qui présente comme autre grandeur d'entrée une valeur caractéristique du trajet parcouru.

2. Dispositif selon la revendication 1, caractérisé en ce que l'installation de comparaison contient comme grandeur de référence au moins une dimension du véhicule.

3. Dispositif selon les revendications 1 et 2, caractérisé en ce que l'émetteur est placé au coin avant du véhicule.

4. Dispositif selon l'une des revendications 1 à 3, caractérisé en ce que l'émetteur est mis en oeuvre automatiquement en fonction de paramètres caractéristiques d'une manoeuvre de garage.

5. Procédé d'aide aux manoeuvres de garage pour des véhicules automobiles mettant en oeuvre un dispositif selon l'une des revendications 1 à 4, caractérisé en ce que le trajet parcouru pendant l'entrée dans le créneau de garage ainsi que d'autres grandeurs du véhicule servent à commander un moyen d'affichage.

# Fig. 1

# Fig. 2

Reflex—
Signal

EP 0 305 907 B1